# EUROPÄISCHE PATENTSCHRIFT

(11) **EP 1 336 224 B1**
(45) Veröffentlichungstag und Bekanntmachung des Hinweises auf die Patenterteilung: **20.08.2008**
(21) Anmeldenummer: 01996908.8
(22) Anmeldetag: 19.11.2001
(51) Int. Cl.: H01Q 13/02, G01S 13/10, H01Q 19/08, G01F 23/284, H01Q 1/22

(54) **HORNANTENNE FÜR EIN RADARGERÄT**
HORN ANTENNA FOR A RADAR DEVICE
ANTENNE CORNET POUR APPAREIL RADAR

(30) Priorität: 20.11.2000 DE 10057441
(43) Veröffentlichungstag der Anmeldung: 20.08.2003
(73) Patentinhaber: VEGA Grieshaber KG, 77709 Wolfach (DE)
(72) Erfinder: FEHRENBACH, Josef, 77716 Haslach i. K. (DE); GRIESSBAUM, Karl, 77796 Mühlenbach (DE); MOTZER, Jürgen, 77723 Gengenbach (DE); SCHULTHEISS, Daniel, 78132 Hornberg (DE)
(74) Vertreter: Preuss, Udo
(86) Internationale Anmeldenummer: PCT/EP2001/013360
(87) Internationale Veröffentlichungsnummer: WO 2002/041446

(56) Entgegenhaltungen:
- EP-A- 0 616 385
- EP-A- 0 884 567
- EP-A- 0 922 942
- EP-A- 0 947 812
- EP-A- 1 076 380
- WO-A-90/13927
- DE-A- 4 405 855
- DE-A- 19 617 963
- DE-U- 9 412 243

## Beschreibung

### Technisches Gebiet

Die Erfindung betrifft eine Hornantenne für ein Radargerät wie beispielsweise ein Radar-Füllstandmessgerät. Mit Hilfe einer solchen an sich seit langem bekannten Homantenne, die in der englischsprachigen Fachliteratur auch als "horn antenna" oder "cone antenna" bezeichnet wird, werden aus eingekoppelter HF-Energie erzeugte Mikrowellen abgestrahlt. Genauer gesagt werden kurze Mikrowellenpulse abgestrahlt. In einem kombinierten Sende- und Empfangssystem eines mit einer solchen Antenne ausgestatteten Füllstandmessgeräts werden die vom Füllgut reflektierten Pulse erfasst und durch Laufzeitmessung dieser Pulse der Abstand zum Füllgut ermittelt. Beispielsweise werden derartige Radar-Füllstandmessgeräte zur kontinuierlichen Füllstandmessung sowohl bei Flüssigkeiten als auch bei Schüttgütern oder einer Kombination derartiger Güter eingesetzt. Derartige Radar-Füllstandmessgeräte werden beispielsweise unter dem Markennamen "VEGAPULS" von der Fa. VEGA Grieshaber KG vertrieben.

### Stand der Technik

Bei Radar-Geräten mit Sendefrequenzen unter 8 GHz werden aktuell grundsätzlich zwei verschiedene Antennentypen eingesetzt. Für chemisch nicht stark beanspruchte Antennen werden metallische Hörner (vorzugsweise aus Edelstahl) verwendet. So wird beispielhaft auf die DE 94 12 243 U1 verwiesen, in der unter anderem Homantennen offenbart sind. Für Geräte in hochaggressiver Umgebung oder bei Anwendungen, in denen das zu messende Füllgut aus Reinheitsgründen nicht mit Metall in Verbindung gebracht werden darf, sind metallische Antennen der genannten Art jedoch nicht geeignet. Zu diesem Zweck wird in der genannten Druckschrift vorgeschlagen, eine metallische Hornantenne mit einer korrosionsbeständigen und für Mikrowellen durchlässigen Schutzschicht zu versehen.

Aus der WO90/13927 ist darüber hinaus eine Hornantenne mit Linsenanordnung bekannt, bei der sowohl die Hornantenne wie auch die Linse aus einem dielektrischen Material wie beispielsweise Polyethylen, Polyester, vernetztes Polysterin, glasfaserverstärkter Kunststoff oder syntaktischer Schaumstoff bestehen. Eine Hornantenne mit einer Füllung aus einem dielektrischen Material ist ferner beispielsweise aus der JP 100 41 737, US 4,161,731 und US 4,783,665 bekannt. Mittels der aus einem Dielektrikum bestehenden Füllung wird zwar gegenüber den vorgenannten Hornantennen eine Verbesserung erzielt, jedoch ist deren Fertigung immer noch relativ aufwendig und teuer, darüber hinaus ist deren mechanische Festigkeit verbesserbar. Außerdem sind zur Anbringung derselben aufwendige Dichtungseinrichtungen erforderlich.

Mit einer Schutzschicht versehene metallische Hornantennen, wie sie eingangs erläutert wurden, sind aufgrund ihres mehrteiligen mechanischen Aufbaus nicht im Lebensmittelbereich einzusetzen, da hier oftmals eine gute Reinigbarkeit gefordert ist. In diesem Fall werden sogenannte dielektrische Stabantennen (wie sie beispielsweise in der DE 44 05 855 A1 offenbart sind) eingesetzt. Sie sind massiv aus chemisch hochbeständigem PTFE (Teflon) hergestellt, besitzen jedoch gegenüber den Homantennen verschiedene Nachteile. So ist ihre Funktion durch Kondensat an der Oberfläche stark beeinflussbar. Aufgrund der großen aktiven und mechanischen Länge sind derartige Stabantennen nur bedingt geeignet für den Einbau in einen Stutzen eines Behälters. Des weiteren kann die Leistung nicht beliebig vergrößert werden. Schließlich ist auch die Richtcharakteristik ungünstiger als bei einer Hornantenne.

Je höher die gewählte Sendefrequenz, um so größer werden die zuvor genannten Probleme bei Stabantennen. Hornantennen sind dagegen für höhere Frequenzen problemlos einsetzbar, sie müssen lediglich in ihren Abmessungen entsprechend angepasst werden. Bei Stabantennen ist nämlich die Stabdicke eine Funktion der Frequenz, sie wird bei höheren Frequenzen immer geringer. So würde die Stabdicke einer Stabantenne im Frequenzbereich von 24 GHz lediglich noch 4 mm (Material PTFE) betragen und die Antenne hätte eine Mindestlänge von 200 mm. Derartige Antennen sind aber leicht zu beschädigen. So würde ein Verbiegen zur dauerhaften Beschädigung der Antenne führen oder zumindest zur Veränderung der Antenneneigenschaften. Darüber hinaus sind derartige Antennen gegenüber Anhaftungen bzw. Kondensaten weitaus empfindlicher, da zusätzlich zur höheren Frequenz noch eine kleinere Oberfläche vorhanden ist. Für Hochfrequenz geeignete Materialien, z.B. Keramik, ist dieser Aufbau nicht durchführbar. Aufgrund des höheren eᵣ-Wertes verringert sich der Durchmesser nochmals.

### Darstellung der Erfindung

Das der Erfindung zugrunde liegende technische Problem besteht darin, eine Hornantenne für ein Radargerät bereitzustellen, die auch in chemisch aggressiveren Umgebungsbedingungen einsetzbar ist und zugleich die bisher auftretenden Nachteile zumindest verringert.

Dieses technische Problem wird durch eine Hornantenne gemäß den Merkmalen des Anspruchs 1 gelöst, die eine Antennenhülle umfasst, die die für eine Hornantenne charakterisierende Geometrie definiert. Die Antennenhülle begrenzt also einen sich aufweitenden Antennenhohlraum, der zumindest teilweise mit einer Füllung aus einem dielektrischen Material ausgefüllt ist, wobei der Antennenhohlraum zum Füllgut hin durch die Umhüllung verschlossen ist. Außenseitig ist die Antennenhülle ebenfalls mit einem dielektrischen Material umhüllt, und zwar so, dass die Antennenhohlraumfüllung und die außenseitige Beschichtung insgesamt die Antennenhülle gegenüber eventuell chemisch aggressiver Atmosphäre in einem mit dem zu messenden Füllgut gefüllten Behälter abschirmt.

Vorzugsweise ist die Antennenhülle insgesamt, d.h. innen- und außenseitig, in dem dielektrischen Material eingebettet, so dass die außenseitige Umhüllung aus dielektrischem Material in Kombination mit der Füllung eine festigkeitserhöhende Wirkung hat. Insbesondere bildet die außenseitige Umhüllung vorzugsweise einen zylindrischen oder zum Füllgut hin zulaufenden konischen Grundkörper.

Erfindungsgemäß umschließt die außenseitige Umhüllung auch die Hohlraumöffnung, d.h. sie ist als einseitig offener Topf geformt. Eine Weiterbildung dieser Ausführungsform sieht vor, dass dann die Abstrahlfläche der Umhüllung als Linse (konkav oder konvex) ausgebildet ist, wodurch die Abstrahlcharakteristik verbesserbar ist.

Bei einer bevorzugten Ausführungsform ist vorgesehen, dass die Antennenhülle aus Metall besteht, die dann innen- und außenseitig mit dem dielektrischen Material umhüllt ist, insbesondere darin vollständig eingebettet ist. Alternativ ist es auch möglich, die Antennenhülle selbst aus einem dielektrischen Material herzustellen, die dann in einem anderen dielektrischen Material eingebettet ist. Die jeweiligen Materialien sind dann hinsichtlich der Abstrahlcharakteristik auszuwählen.

Der Erfindung liegt der Gedanke zugrunde, zur Stabilisierung und Erhöhung der mechanischen Festigkeit den von der Hornantenne eingeschlossenen Innenraum (Hohlraum), zumindest teilweise, mit einem Füllmaterial auszufüllen, um damit gleichzeitig das Eindringen von Kondensat oder dergleichen in den Hohlraum zu verhindern, und darüber hinaus auch außenseitig ein dielektrisches Füllmaterial an der Antennenhülle aufzubringen. Durch diese Kombination von innen- und außenseitiger dielektrischer Umhüllung wird die Hülle geschützt und mechanisch stabiler.

Vorzugsweise werden zumindest diejenigen Flächen einer üblichen metallischen Hornantenne mit einer schützenden Beschichtung versehen, die mit der chemisch aggressiven Atmosphäre in einem mit dem zu messenden Füllgut gefüllten Behälter in Kontakt kommen können. Damit wird erreicht, dass zum einen eine Hornantenne, nunmehr auch in Umgebungsbedingungen einsetzbar ist, für die bisher andere Antennenarten notwendig waren, zum anderen wird die Druckabstützung in derartigen Atmosphären verbessert.

Eine erfindungsgemäße Füllung kann somit auch als schützende Schutzschicht wirken. Falls das Füllmaterial nur eine mechanisch abstützende Eigenschaft hat, so ist das Aufbringen einer gesonderten Schutzschicht auf denjenigen metallenen Teilen oder Flächen der Hornantenne möglich, die mit der chemisch aggressiveren Atmosphäre in Kontakt kommen. Durch Ausfüllen des Innenraums der Antenne mit einem Füllgut wird gleichzeitig die Druckabstützung wesentlich erhöht.

Für die Füllung können verschiedenste Materialien eingesetzt werden. Produktionstechnisch ist es äußerst günstig, beispielsweise einen Schaum ( wie z.B. ROHACELL) oder ein anderes Material einzusetzen, dessen eᵣ nahe Luft liegt. Bei bestimmten Anwendungen ist es aber auch möglich, nicht nur die Beschichtung, sondern auch die Füllung aus einem dielektrischen Material vorzusehen, wie beispielsweise PTFE. Für eine hohe mechanische und thermische Stabilität empfiehlt sich die Verwendung eines faserverstärkten Kunststoffes wie beispielsweise PPS oder PP. Derartige faserverstärkte Kunststoffe können auch in Kombination mit anderen geeigneten Werkstoffen eingesetzt werden. So kann die Beschichtung durch Einbrennen, Einsintern oder dergleichen aufgebracht werden. Falls die Füllung aus einem dielektrischen Material besteht, kann selbstverständlich auch die Füllung derart hergestellt werden.

Beim Einsatz in explosionsgefährdeten Bereichen kann es von Vorteil sein, die dielektrische Oberfläche der Antenne mit einer leitfähigen Schicht zu überziehen, wie sie beispielsweise an sich aus der DE 196 17 963 A1 bekannt ist. Mit einer solchen Schicht wird die statische Aufladung der Hornantenne verhindert.

Zur Vereinfachung der Abdichtung einer derartigen Hornantenne ist es insbesondere zweckdienlich, die Ummantelung aus dielektrischem Material auch auf einen Flansch zur Befestigung der Hornantenne aufzubringen, und zwar auf der in Abstrahlrichtung der Hornantenne gerichteten Seite. Dadurch wird in optimaler Weise eine Abdichtung zwischen Flansch und Behälter erzielt und gleichzeitig der Flansch vor der chemisch aggressiven Atmosphäre im Behälter geschützt. Darüber hinaus müssen keine separaten Dichtungsteile angefügt werden.

Vorzugsweise weist eine derartige Hornantenne für ein Radar-Füllstandmessgerät also eine Antennenhülle auf, die für eine Hornantenne die charakterisierende Geometrie hat und innenseitig, zumindest teilweise, mit einer Füllung aus dielektrischem Material ausgefüllt ist, welche die Hohlraumöffnung des Antennenhohlraums verschließt und gleichzeitig auch noch auf die in Abstrahlrichtung gerichtete Seite eines Befestigungsflansches der Antenne herausgezogen ist. Vorzugsweise ist auch eine derartige Antenne außenseitig mit dem dielektrischen Material umhüllt, wie es bereits zuvor eingangs erläutert wurde.

Eine bevorzugte Ausführungsform umfasst eine aus Metall bestehende Antennenhülle in Form eines Zylinders, der innen mit einem kegelförmigen Hohlraum versehen ist, der in einen zylindrischen Hohlraum übergeht. In diesen zylindrischen Hohlraum erstreckt sich ein Erregerstift, der ein in einer Elektronikeinheit erzeugtes Mikrowellensignal in diesen Hohlraum abstrahlt. Im Antennenhohlraum selbst befindet sich eine aus dielektrischem Material geformte Füllung in Form eines Kegels, dessen Spitze sich in den zylinderförmigen Hohlraum in der Antennenhülle erstreckt. Vorzugsweise weist die Kegelspitze eine etwas größere Winkelneigung auf als der Rest der Füllung. Hierdurch wird die Abstrahlcharakteristik verbessert. Der Winkelunterschied beträgt vorzugsweise 2-3 Grad.

Gemäß einem anderen Aspekt der Erfindung besteht die innenseitige Füllung aus mehreren Teilen unterschiedlichen dielektrischen Materials. Die außenseitige Umhüllung wird durch ein mit der innenseitigen Umhüllung verbundenen Teil aus dielektrischem Material gebildet, das sich radial so weit nach außen erstreckt, dass es einen dahinterliegenden Flansch zur Befestigung eines Füllstandmessgerätes im Befestigungszustand gegenüber der Atmosphäre im Behälter abschirmt.

Insbesondere ist es vorteilhaft, die verschiedenen Teile der Füllung und der Außenumhüllung miteinander zu verschrauben und ein oder mehrere Teile der Innenfüllung mit der Antennenhülle zu verkleben. Dadurch ist eine optimale Abstrahlung ermöglicht, gleichzeitig aber auch eine hohe Temperaturbeständigkeit und Anpassung an verschiedene Temperaturausdehnungskoeffizienten erzielt. Als Material kommen insbesondere PTFE, Epoxidharz, gebundene Mikrohohlglaskugeln und modifiziertes Teflon zum Einsatz.

Es sei hier noch angemerkt, dass selbstverständlich alle in der vorliegenden Beschreibung zu einer speziellen Ausführungsform der Erfindung erläuterten Merkmale und technischen Details ohne weiteres beliebig miteinander kombiniert werden können, und auch problemlos bei einer anderen Ausführungsform der Erfindung einzeln oder in Kombination miteinander angewandt werden können. Dies wird sich nach den jeweiligen Einsatzbedingungen und dem verwendeten Füllstandmessgerät richten.

### Kurze Beschreibung der Zeichnungen

Im Folgenden sind zur weiteren Erläuterung und zum besseren Verständnis mehrere Ausführungsbeispiele der Erfindung unter Bezugnahme auf die beigefügten Zeichnungen näher beschrieben. Es zeigt:
- Fig. 1: eine schematische Seitenansicht eines Radar-Füllstandmessgeräts mit einer ersten Ausführungsform einer Homantenne,
- Fig. 2.: eine schematische Seitenansicht eines Radar-Füllstandmessgeräts mit einer zweiten Ausführungsform einer Homantenne,
- Fig. 3.: eine schematische Seitenansicht eines Radar-Füllstandmessgeräts mit einer weiteren Ausführungsform einer Hornantenne,
- Fig. 4: eine schematische Seitenansicht des in der Fig. 3 gezeigten Füllstandmessgeräts, das hier auf einem Flansch eines Behälters angebracht ist,
- Fig. 5a-5c: jeweils eine schematische Seitenansicht eines Füllstandmessgeräts, wie es in den Fig. 3 und 4 gezeigt ist, wobei jedoch bei den hier gezeigten Abwandlungen die Hornantennen-Abstrahlöffnung als speziell gestaltete Abstrahllinse ausgebildet ist,
- Fig. 6: eine schematische Seitenansicht einer weiteren Ausführungsform einer Homantenne, die vollständig aus einem dielektrischen Material besteht,
- Fig. 7: eine schematische Schnittansicht eines erfindungsgemäßen Füllstandmessgerätes mit einer Hornantenne und
- Fig. 8: eine schematische Schnittansicht eines weiteren Füllstandmessgerätes mit einer Hornantenne.

### Beschreibung der Figuren

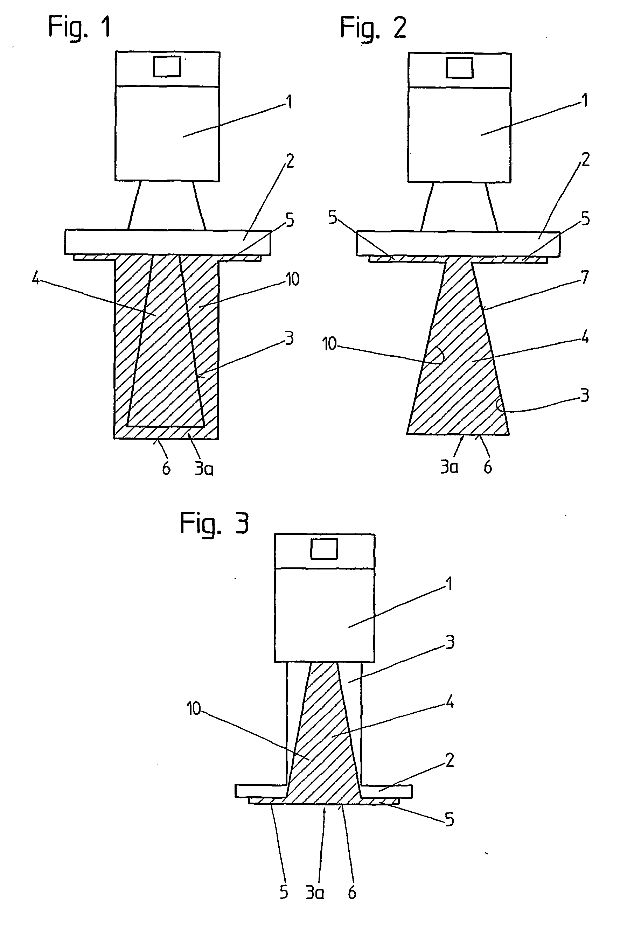

Die in der Fig. 1 gezeigte schematische Seitenansicht eines Füllstandmessgeräts 1 mit einer Radar-Hornantenne umfasst einen Befestigungsflansch 2, auf den die Hornantenne 3 folgt. Die Hornantenne 3 besteht hier aus Metall, das von einem Dielektrikum 10 (dielektrisches Material) vollständig umschlossen bzw. hierin eingebettet ist. Das Dielektrikum 10 füllt überdies den Homantennenhohlraum 4 aus und bildet außenseitig einen Zylinder. Die Hornantennenöffnung 3a ist hier mit dem Dielektrikum 10 verschlossen und als ebene Fläche 6 ausgebildet, die senkrecht zur prinzipiellen Abstrahlrichtung der Hornantenne 3 steht.

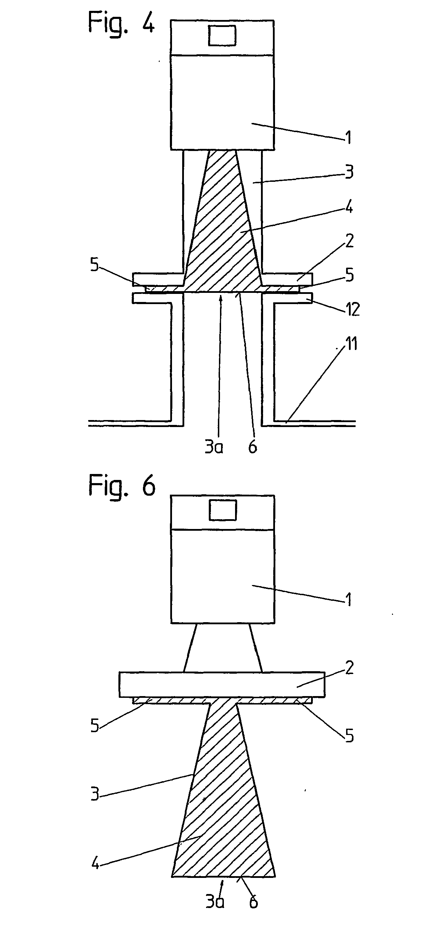

Wie aus der Fig. 1 ersichtlich ist, ist die Beschichtung aus dem Dielektrikum 10 am Befestigungsflansch 2 ebenfalls ausgebildet, d.h. das Dielektrikum 10, das an sich eine zylindrische Außenkontur um die Hornantenne 3 bildet, steht mit einer gewissen Dicke von diesem Außenzylinder vor. Diese flanschartige Ausbildung 5 des Dielektrikums 10 schafft, wie es insbesondere aus der Fig. 4 ersichtlich ist, eine hervorragende Abdichtung zu einem Befestigungsflansch 12 eines Behälters 11.

Bei dem in Fig. 1 gezeigten Ausführungsbeispiel ist eine übliche Hornantenne 3 verwendbar, d.h. die Hornantenne 3 besteht aus Metall und kann als Kegelstumpf, exponentielles Horn, Rechteckhorn oder dergleichen in seiner Geometrie ausgestaltet sein. Das Dielektrikum 10 ist beispielsweise PTFE, PP, PFA. Es sind aber selbstverständlich auch alle anderen bekannten Dielektrika, die in diesem technischen Gebiet bekannt sind, einsetzbar. Bei dem in Fig. 1 gezeigten Ausführungsbeispiel einer Hornantenne 3 ist sowohl die Außenbeschichtung wie auch die Füllung des Hohlraums 4 der Hornantenne 3 mit dem gleichen Dielektrikum 10 gefüllt bzw. umhüllt. Es ist aber auch selbstverständlich möglich, die Füllung des Hornantennen-Hohlraums 4 aus einem anderen Material vorzusehen als die eigentliche mit der möglicherweise aggressiven Umgebung in einem Behälterinneren in Kontakt kommende Außenbeschichtung.

Das heißt, die Füllung des Hohlraums 4 der Hornantenne 3 könnte aus einem Schaum bestehen, dessen Dielektrizitätskonstante eᵣ nahe der Dielektrizitätskonstanten von Luft ist. Mit einer derartigen schaumartigen Füllung würde eine hervorragende Druckabstützung erzielt werden. Eine nur die Außenkontur bildende Beschichtung aus einem Dielektrikum der vorgenannten Art würde dann den Schutz vor der aggressiven Umgebung im Behälterinneren bieten. Damit würden sowohl die Fertigung vereinfacht als auch die Herstellungskosten für eine derartige Hornantenne gesenkt werden.

Bei der in Fig. 2 gezeigten alternativen Ausführungsform ist die Hornantenne 3 insgesamt aus einem dielektrischen Material 10 geformt. Die metallische Hülle der Hornantenne 3 wird durch Aufbringen einer leitfähigen Schicht 7 auf die Seitenflächen der Hornantenne 3 erzielt. Wiederum ist die aus dem Dielektrikum 10 gebildete Form der Hornantenne 3 flanschseitig mit einem Befestigungsflansch 5 ausgebildet. Die Hornantennenabstrahlöffnung 3a ist wie bei der Ausführungsform der Fig. 1 als ebene Fläche 6 ausgebildet.

Diese Ausführungsform hat den Vorteil, dass trotz der etwas reduzierten chemischen Beständigkeit die gesamte Hornantenne 3 preisgünstiger herzustellen ist. Es sei hier noch angemerkt, dass bei Bedarf die vorhandene Metallisierung 7 auch noch mit einer weiteren Schutzschicht versehen werden kann, um eine noch bessere, beständigere Hornantenne zu schaffen. Das Aufbringen der Metallisierung 7 auf dem aus einem Dielektrikum 10 bestehenden Kontur der Hornantenne 3 kann beispielsweise durch Aufdampfen, Galvanisieren, Aufdrucken oder Lackieren erfolgen.

In der Fig. 3 ist eine weitere Ausführungsform einer Hornantenne 3 dargestellt, die einen flanschbündigen Aufbau hat. Durch diesen Aufbau verringert sich der Bedarf an dielektrischem Material 10 gegenüber der in den Fig. 1 und 2 gezeigten Konstruktion deutlich, da die Außenflächen der Hornantenne 3 nicht bedeckt werden müssen. Es ist lediglich eine flanschartige Schicht 5 an der Vorderseite der Hornantenne 3 notwendig, die gleichzeitig als Abdichtung zu einem Behälter dient. Wie bereits zuvor angedeutet, ist hier der gesamte Hohlraum 4 der Hornantenne 3 mit dem Dielektrikum 10 ausgefüllt. Selbstverständlich ist es aber auch wieder möglich, wie bereits zuvor zu den Ausführungsformen gem. den Fig. 1 und 2 erläutert, dass der Hohlraum 4 der Hornantenne 3 mit einem anderen Material gefüllt ist, das Dielektrikum 10 nur eine vorderseitige, die Abstrahlfläche 6 bildende Schicht umfasst, die hier zudem als Flanschabdichtung dient. Auch bei der in Fig. 3 gezeigten Ausführungsform ist die Abstrahlfläche 6 eben ausgebildet.

In der Fig. 4 ist schematisch die Befestigung an einem Befestigungsflansch 12 eines Behälters 11 einer Hornantennen, wie sie in der Fig. 3 gezeigt ist, ersichtlich. Hier liegt also die flanschartige Ausbildung des Dielektrikums 5 an dem Flansch 12 des Behälters 11 an. Durch nicht dargestellte Schrauben, die die Flansche 2 und 12 des Füllstandmessgerätes 1 bzw. des Behälters 11 fest gegeneinander ziehen, ist eine äußerst dichte Anbringung des Füllstandsmessgerätes 1 ohne weitere separate Dichtungen möglich. Dichtigkeit wird hier durch die Schicht 5 aus Dielektrikum 10 erzielt.

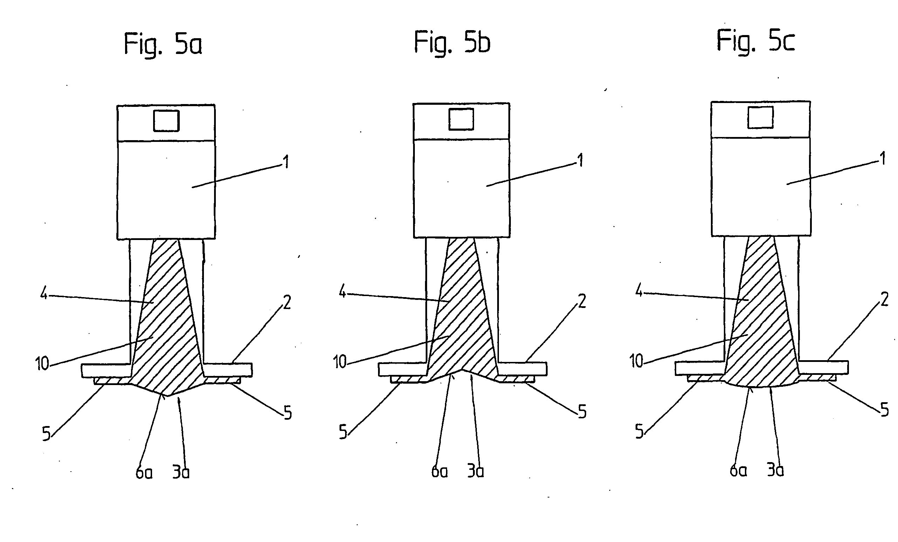

Aus den Fig. 5a-5c ist ersichtlich, dass die Abstrahlfläche 6 einer Ausführungsform gemäß der Fig. 4 bzw. 3 nicht als ebene Fläche ausgebildet sein muss. So kann diese, wie in der Fig. 5a gezeigt, als konvexe Linse 6a geformt sein. Je nach Anwendungsfall und der im Radar-Füllstandsmessgerät verwendeten Sendefrequenz kann es zweckmäßig sein, die Abstrahlfläche 6a stärker oder schwächer konvex auszubilden. Es ist aber auch genauso möglich, die Abstrahlfläche 6b konkav auszubilden, wie es in der Fig. 5b gezeigt ist. Eine weitere abgewandelte Ausführungsform ist in Fig. 5c gezeigt. Hier ist das Dielektrikum 10 an der Abstrahlfläche 6c leicht gewölbt zum Behälterinneren geformt.

Alle Ausführungsformen sind äußerst zweckmäßig an die jeweiligen Bedingungen angepasst, in dem das Dielektrikum 10 mit der Abstrahlfläche 6a-6c speziell auf die verwendete Frequenz und die Umgebungsbedingungen angepasst ist, so dass das Dielektrikum 10 wie eine dielektrische Linse wirkt. Es sei hier noch angemerkt, dass insbesondere die Ausgestaltung als dielektrische Linse der Abstrahlflächen 6a-6c ein besseres Abtropfen bzw. Ablaufen von Feuchtigkeit und Kondensat von der Hornantenne 3 erlauben, was bevorzugt wird.

Die in der Fig. 6 dargestellte weitere Ausführungsform einer Hornantenne 3 besteht nur aus dielektrischem Material 10, es entfällt der metallische Mantel der Hornantenne. Aufgrund der Materialeigenschaften wirkt der hintere Teil der Hornantenne 3 als elektrischer Wellenleiter, die Abstrahlung der elektromagnetischen Wellen geschieht an der Abstrahlfläche 6. Die komplette Hornantenne 3 kann somit einteilig hergestellt werden. Sie hat die gleichen Vorteile wie eine bekannte dielektrische Stabantenne, jedoch bei deutlich günstigeren Abmessungen. Sie besitzt nämlich einen großen Durchmesser und deshalb eine höhere mechanische Stabilität.

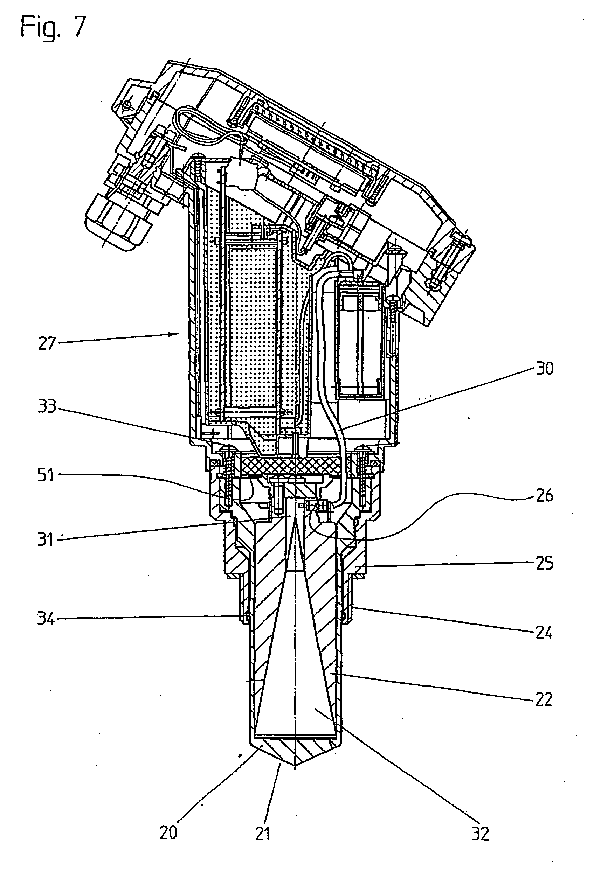

Das schematisch in Schnittansicht dargestellte erfindungsgemäße Füllstandmessgerät gemäß der Fig. 7 umfasst ein Gehäuse 27, in dem die gesamte Elektronik des Füllstandmessgerätes untergebracht ist. Diese Elektronik entspricht dem Stand der Technik und bedarf hier keiner weiteren Erläuterung. Über ein Koaxialkabel 30 wird das in der Elektronikeinheit erzeugte Mikrowellensignal zu einem Erregerstift 26 geleitet, der in einen Hohlraum 31 mündet. Der Erregerstift 26 selbst ist in einem Metallzylinder 22 befestigt, der koaxial mit dem Hohlraum 31, in dem der Erregerstift 26 endet, mit einem zum Erregerstift hin konisch zulaufenden kegelstumpfartigen Hohlraum ausgebildet. Dieser kegelstumpfartige Hohlraum geht dann in den zylindrischen Hohlraum 31 über. Vorzugsweise besteht der Metallkörper 22, der hier die Antennenhülle bildet, aus Aluminium. Es sind aber auch andere Materialien, wie beispielsweise Edelstahl, denkbar.

Der kegelstumpfartige Hohlraum in der Antennenhülle 22 ist mit einem Kegel 32 aus Kunststoff gefüllt. Dieser Kegel 32 hat im Bereich der Übergangsstelle des kegelstumpfartigen Hohlraums in den zylindrischen Hohlraum 31 einen Absatz, so dass die Spitze des Kegels 32 einen geringfügig anderen Winkel gegenüber der Symmetrieachse aufweist als die restliche Mantelfläche. Die Winkeländerung beträgt ungefähr 2 bis 3 Grad. Am breiteren Ende des Kegels 32 weist der Kegel ebenfalls einen Absatz auf, der einen Zylinderabschnitt einleitet.

Die Antennenhülle 22 und der darin eingeführte Kunststoffkegel 32 werden von einer Ummantelung 20 aus Kunststoff, hier modifiziertes Teflon, vollständig umschlossen. Koaxial zur Antennenhülle 22 bildet diese Ummantelung 20 an der Abstrahlfläche eine konvexe Linse 21. Dadurch sind die an sich bekannten verbesserten Abstrahlcharakteristika einer solchen Antenne erzielbar. Die Ummantelung 20 erstreckt sich bis weit über die Höhe, in der der Erregerstift 26 platziert ist, und ist am oberen Ende mittels Schrauben 33 an einem Grundkörper befestigt. Über diese aus Kunststoff bestehende Ummantelung 20 ist eine weitere Hülse 25 ausgebildet, die mit der Ummantelung 20 über einen O-Ring 34 abgedichtet ist. Mittels einer Federscheibe 51 wird die Antennenhülle 22 nach unten gegen die Ummantelung 20 gedrückt, wodurch einer temperaturbedingten Ausdehnung Rechnung getragen wird.

Erstmals wird so also eine Hornantenne 22 innen- und außenseitig gegenüber aggressiven Atmosphären in Behältern geschützt, darüber hinaus auch vor eventuell hohen Temperaturen, gleichzeitig aber auch die Festigkeit einer solchen Antenne erhöht. Darüber hinaus sind die Abstrahlcharakteristika auch bei kleinen Abmessungen hervorragend. Es sei hier noch am Rande erwähnt, dass über ein Gewinde 24 die Hülse 25 und damit das gesamte Füllstandmessgerät in der Einschrauböffnung eines Behälters einzuschrauben ist und somit nur der untere Teil der Hornantenne in den Behälter ragt, dort aber aufgrund der Ummantelung 20 und der Füllung 32 gegenüber der Atmosphäre im Behälter abgedichtet ist.

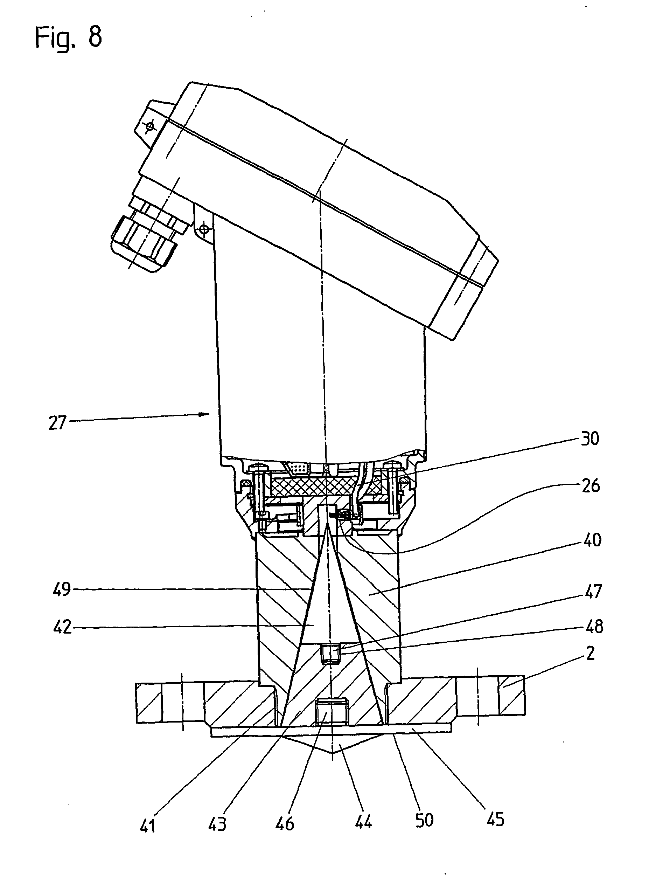

Eine weitere Ausführungsform einer Hornantenne ist in der teilweise geschnittenen Darstellung gemäß der Fig. 8 gezeigt. Wiederum umfasst dieses Füllstandmessgerät ein Gehäuse 27, in dem die gesamte Elektronikeinheit, die an sich bekannt ist, untergebracht ist. Der hier relevante Teil umfasst wiederum einen außenseitig zylindrischen Antennenkörper 40, der koaxial innenseitig mit einem kegelartigen Hohlraum versehen ist. Am oberen Ende des kegelförmigen Hohlraums schließt sich ein zylindrischer Hohlraum an, in den ein Erregerstift 26 ragt, der über ein Koaxialkabel 30 mit der Elektronikeinheit verbunden ist. Wie zuvor erläutert, wird auch hier über das Koaxialkabel 30 das Mikrowellensignal, das erzeugt wurde, zum Erregerstift 26 geleitet und dort erfolgt die Übertragung in die Hornantenne.

Am unteren Ende ist der hier aus Edelstahl bestehende Antennenkörper 40 mit einem Absatz versehen, der ein Schraubgewinde 41 aufweist. Über das Schraubgewinde 41 ist dieser Körper 40 mit einem Flansch 2 verschraubt, der hier ebenfalls aus Edelstahl besteht. Wie aus der Fig. 8 hervorgeht, ist der kegelförmige Hohlraum im Antennenkörper 40 durch eine dreiteilige Füllung 42, 43, 44 gefüllt. Die oberste Füllung 42 besteht aus PTFE (Teflon) und ist kegelförmig ausgebildet. Die Spitze dieses Kegelteils 42 ragt in den zylindrischen Hohlraum, in den sich auch der Erregerstift 26 erstreckt. Am Grundteil des Kegelteils 42 ist ein Zapfen 47 angeformt, der ein Außengewinde 48 aufweist. Das Mittelteil 43 der Füllung besteht hier aus epoxidharzgebundenen Mikrohohlglaskugeln und weist die Form eines Kegelstumpfes auf. An beiden Grundflächen ist zentrisch ein Sackloch ausgebildet, das jeweils mit einem Innengewinde versehen ist.

Das zum Behälterinneren gerichtete dritte Füllungsteil 44 ist zum Behälter hin mit einer konvexen Linsenform ausgebildet, an die sich eine vollflächige Scheibe 45 einstückig anschließt. Der Durchmesser der Scheibe 45 ist so gewählt, dass er mit dem Behälterrand, an dem das Füllstandmessgerät zu befestigen ist, dichtend anliegt. Die Rückseite der Scheibe 45 ist wiederum zentrisch mit einem Zapfen 46 ausgebildet, der ein Außengewinde 50 aufweist, das mit dem Innengewinde des Mittelteils 43 der Füllung zusammenpasst. Dieses dritte Füllungsteil 44, 45 besteht aus einem modifizierten Teflon, hier insbesondere aus einem unter der Bezeichnung TFM600 erhältlichen Material.

Am Antennenkörper 40 ist über ein Gewinde 41 ein Flansch 2 aufgeschraubt, der ebenfalls aus Edelstahl besteht. Der Flansch 2 weist über den Umfang verteilt Durchgangslöcher auf, durch die Schrauben gesteckt werden, mit der der Flansch 2 an einer Behälteröffnung anzuschrauben ist. Dabei sitzt die Behälterwandung auf dem Teil 45 der Füllung 44 auf und dichtet damit ab.

Wie zuvor erläutert, sind die drei aus verschiedenen Materialien bestehenden Füllungsteile 42, 43, 44 miteinander verschraubt. Zur Befestigung der gesamten Füllung 42, 43, 44 ist das Mittelteil 43 auf der Umfangsfläche mit dem Antennenkörper 40 verklebt, insbesondere mittels eines Silikonklebers. Der kegelförmige Teil 42 der Füllung weist ein derartiges Außenmaß auf, dass zwischen der Außenwandung des Kegels 42 und der Innenwandung des Antennenkörpers 40 ein minimaler Spalt 49 von ungefähr 0,5 mm verbleibt, so dass durch Temperatureinflüsse bedingte Ausdehnungsunterschiede ausgeglichen werden können. Durch die spezielle Materialwahl ist zum einen eine hervorragende Beständigkeit gegenüber chemisch aggressiven Atmosphären im Behälter geschaffen, zum anderen auch eine hervorragende Temperaturbeständigkeit. Ein wie in der Fig. 8 dargestelltes Gerät ist in Umgebungstemperaturen von bis zu 150° C einsetzbar. Die innenseitige Auskleidung mit der speziellen dreiteiligen Füllung bietet eine optimale Ausbreitung der Welle und gleichzeitig eine besondere Temperaturbeständigkeit und Beständigkeit gegenüber aggressiven Medien.

Alle Ausführungsformen haben den Vorteil, dass sie sich nicht nur auf höherfrequente Radar-Füllstandsmessgeräte beschränken, derartige Ausführungsformen von Radarantennen sind für Geräte aller Frequenzen einsetzbar. Eine Reinigung der Hornantenne 3 ist einfach durchführbar, da die Oberfläche einteilig, dichtungsfrei und somit spaltfrei ist. Damit ist insbesondere auch der Einsatz in Lebensmittelanwendungen problemlos möglich.

Bei den Ausführungsformen der Figuren 1 bis 6 und 8 handelt es sich um Beispiele, die das Verständnis der Erfindung erleichtern.

## Patentansprüche

1. Radar-Füllstandmessgerät zum Einbau in einen Behälter, wobei das Füllstandmessgerät eine Hornantenne aufweist;
wobei die Hornantenne eine Antennenhülle (22) umfasst, die einen sich aufweitenden Antennenhohlraum mit einer Hohlraumöffnung aufweist;
wobei in dem Antennenhohlraum eine den Antennenhohlraum zumindest teilweise ausfüllende Füllung (32) vorhanden ist;
wobei eine außenseitige Umhüllung (20) der Antennenhülle (22) aus dielektrischem Material vorgesehen ist, welche zum Schutz der Hornantenne gegenüber einer aggressiven Atmosphäre im Behälterinneren ausgebildet ist;
wobei die Umhüllung (20) in Form von einer Ummantelung oder Beschichtung ausgeführt ist;
wobei die Umhüllung (20) im Bereich einer durch die Hohlraumöffnung definierten Ebene derart ausgebildet ist, dass sie den Antennenh ohlraum zum Füllgut hin verschließt und dort eine in Abstrahlrichtung gerichtete Fläche (21) ausbildet;
wobei die der Atmosphäre des Behälterinneren ausgesetzte Fläche (21) einteilig und spaltfrei ausgeführt ist, so dass eine Reinigung der Hornantenne einfach durchführbar ist; und
wobei die in Abstrahlrichtung gerichtete Fläche konkav, konvex oder leicht gewölbt ausgeführt ist.

2. Radar-Füllstandmessgerät nach Anspruch 1,
**dadurch gekennzeichnet, dass** ein Federelement (51) vorhanden ist, mit der die Antennehülle (22) gegen die Innenseite der Umhüllung (20) drückbar ist.

3. Radar-Füllstandmessgerät nach Anspruch 1 oder 2,
**dadurch gekennzeichnet, dass** der Antennenhohlraum sich aus einem kegelförmigen Teil und einem zylindrischen Teil (31) zusammensetzt.

4. Radar-Füllstandmessgerät nach einem der voranstehenden Ansprüche,
**dadurch gekennzeichnet, dass** die Antennehülle (22) aus Metall, insbesondere Edelstahl oder Aluminium oder einer Aluminiumlegierung besteht.

5. Radar-Füllstandmessgerät nach einem der voranstehenden Ansprüche,
**dadurch gekennzeichnet, dass** die Hornantenne mit einer leitfähigen Beschichtung versehen ist.

6. Radar-Füllstandmessgerät nach Anspruch 5,
**dadurch gekennzeichnet, dass** die leitfähige Beschichtung aus einem PTFE-Kohle Gemisch besteht.

## Claims

1. A radar fill-level measuring device for installation in a container,
wherein the fill-level measuring device comprises a horn antenna;
wherein the horn antenna comprises an antenna casing (22) which comprises a widening hollow space of the antenna with a hollow space opening;
wherein in the hollow space of the antenna there is a filling (32) that fills the hollow space of the antenna at least in part;
wherein an external covering (20) of the antenna casing (22) made of a dielectric material is provided, which covering (20) is designed to protect the horn antenna from a hostile atmosphere in the interior of the container;
wherein the covering (20) is designed in the form of a casing or coating;
wherein the covering (20) in the region of a plane defined by the hollow space opening is designed such that it closes off the hollow space of the antenna towards the feed material and in that location forms an area (21) that faces in the direction of radiation;
wherein the area (21) that is exposed to the atmosphere in the interior of the container is designed so as to be in one part and without a gap so that cleaning of the horn antenna can easily be carried out; and
wherein the area that faces the direction of radiation is designed so as to be concave, convex or slightly curved.

2. The radar fill-level measuring device according to claim 1,
**characterised in that** there is a spring element (51) by means of which the antenna casing (22) can be pressed against the inside of the covering (20).

3. The radar fill-level measuring device according to claim 1 or 2,
**characterised in that** the hollow space of the antenna comprises a conical part and a cylindrical part (31).

4. The radar fill-level measuring device according to any one of the preceding claims,
**characterised in that** the antenna casing (22) comprises metal, in particular stainless steel or aluminium or an aluminium alloy.

5. The radar fill-level measuring device according to any one of the preceding claims,
**characterised in that** the horn antenna comprises a conductive coating.

6. The radar fill-level measuring device according to claim 5,
**characterised in that** the conductive coating consists of a PTFE-carbon compound.

## Revendications

1. Dispositif radar destiné être intégré dans un récipient pour mesurer le niveau de remplissage, ledit dispositif de mesure du niveau de remplissage comportant une antenne cornet ;
ladite antenne cornet comprenant une enveloppe d'antenne (22) qui comporte une cavité d'antenne avec un orifice d'accès à ladite cavité ;
ladite cavité d'antenne étant pourvue d'un remplissage (32) qui occupe au moins partiellement la cavité d'antenne ;
l'enveloppe d'antenne (22) étant pourvue, sur la face extérieure, d'une gaine (20) en matériau diélectrique qui est réalisée de manière à protéger l'antenne cornet de l'atmosphère agressive régnant à l'intérieur du récipient ;
la gaine (20) étant réalisée sous forme d'une enveloppe ou d'un revêtement ;
la gaine (20) étant réalisée, au niveau d'un plan défini par l'orifice d'accès à la cavité, de manière à fermer ladite cavité d'antenne vis-à-vis de la matière de remplissage et à y former une face (21) orientée en direction du sens d'émission ;
la face (21), qui est exposée à l'atmosphère régnant à l'intérieur du récipient, étant réalisée d'une seule pièce ne présentant pas de fentes, facilitant de ce fait le nettoyage de l'antenne cornet ;
la face orientée en direction du sens d'émission étant de forme concave, convexe ou légèrement bombée.

2. Dispositif radar destiné à mesurer le niveau de remplissage selon la revendication 1,
**caractérisé en ce qu'**il comporte un élément de ressort (51) permettant de pousser l'enveloppe d'antenne (22) contre la face intérieure de la gaine (20).

3. Dispositif radar destiné à mesurer le niveau de remplissage selon les revendications 1 ou 2,
**caractérisé en ce que** la cavité d'antenne est composée d'une partie conique et d'une partie cylindrique (31).

4. Dispositif radar destiné à mesurer le niveau de remplissage selon l'une des revendications précédentes,
**caractérisé en ce que** l'enveloppe d'antenne (22) est réalisée en métal, notamment en acier inox ou en aluminium ou en alliage d'aluminium.

5. Dispositif radar destiné à mesurer le niveau de remplissage selon l'une des revendications précédentes,
**caractérisé en ce que** l'antenne cornet est pourvue d'un revêtement conducteur.

6. Dispositif radar destiné à mesurer le niveau de remplissage selon la revendication 5,
**caractérisé en ce que** le revêtement conducteur est réalisé en un mélange de type PTFE-carbone.
